# EUROPEAN PATENT APPLICATION

(11) **EP 3 352 492 A1**
(43) Date of publication of application: **25.07.2018**
(21) Application number: 17000091.3
(22) Date of filing: 19.01.2017
(51) Int. Cl.: H04W 12/06, H04W 4/00, H04L 29/06, H04W 72/04, H04W 88/06, H04L 1/12, H04L 1/18

(54) **AUTHENTICATION METHOD**

(71) Applicant: Giesecke+Devrient Mobile Security GmbH, 81677 München (DE)
(72) Inventor: Tea, Vui Huang, SE-12061 Stockholm (SE)

(57) **Abstract**

The present invention is directed towards a method for establishing a secure communication between an end-device (10) and a server system (20). The end-device (10) sends a join-request message to the server system (20) using a first channel. The join request message comprises an indicator for the server system (20). The indicator indicates whether the server system (20) shall use the first channel or a second channel in order to send back a join-accept message.

## Description

The present invention is directed towards a method for authentication between an end-device and a server system and is furthermore directed towards an authentication protocol implementing the suggested method. Furthermore, the present invention is directed towards an authentication system, which can be operated in accordance with the suggested method and the suggested authentication protocol.

The LoRaWAN specification by LoRa Alliance, Version 1.0 dated January 2015, is publicly available over the internet and introduces basic concepts, which form the starting point for the present invention. The LoRaWAN network protocol is optimized for battery-powered end-devices that may be either mobile or mounted at fixed locations. Typically LoRaWAN networks are laid out in star-of-stars topology in which gateways relay messages between end-devices and a central network server at the backend. Gateways are connected to the network server via standard IP connections while end-devices use single-Hop-LoRa or other further communication means.

To participate in a LoRaWAN LPWA network, each end-device has to be activated. For Over-The-Air Activation (OTAA), end-devices must follow a join procedure prior to participating in data exchanges with the network-server. Typically each end-device is activated once on deployment, and it proceeds to continuously send data to the network server on a set schedule with the same session context information obtained from the join procedure. An end-device has to go through a new join procedure every time it is reset or has lost the session context information. Otherwise, it does not need to do a join procedure again. Alternatively, an end-device can be activated by Personalization (ABP). According to ABP, the two steps of end-device personalization and activation are done as one step.

Similarly, to securely join a LoRa network, the end-device sends an authentication uplink 'join-request', and waits for a downlink 'join-accept'. If this is not successful, the end-device cannot join the LPWA network, and hence cannot send any uplink. The key role of an end-device, in particular in the M2M field, is to send sensor data periodically uplink to the LPWA gateway, hence if it cannot send anything uplink, its main purpose is defeated.

Due to the radio nature of LPWA, there may be scenarios where it is possible for a device to send uplink without any problems, but is not able to confidently receive downlink. In such situations, the device could still perform its main function of sending sensor data uplink. But, because it is not able to receive a downlink 'join-accept', it is not able to join the LPWA network and hence cannot send any sensor data uplink. Such a situation may occur, for instance, when the end-device is deployed beneath the surface when serving, for instance, as a consumption metering device.

Thus, it is an object of the present invention to provide a method for establishing a secure communication between an end-device and a server system, which enables a server system to communicate with an end-device although the server system might be impeded from sending messages to the end-device.

The object is solved by a method according to the independent claims. Further advantages and technical effects are disclosed in the dependent claims.

The present invention is based on the basic concept that instead of using the same communication channel when establishing a secure communication, an alternative communication channel may be used.

Accordingly, the method for establishing a secure communication between an end-device and a server system, comprises transmitting at least a join-request message from the end-device to the server system via a first channel, wherein the join-request message comprises an indicator; and wherein the server system transmits a join-accept message from the server system to the end-device employing, based on the (content of) indicator, the first channel and/or a second channel, wherein the join-accept message authorizes the end-device to send messages to the server system.

The secure communication being performed according to the suggested method may be the activation of the end-device as commonly known in the art. It is an aspect of the present invention that the LoRaWAN specification can be re-used and is adapted according to the present invention. This means that the overall protocol can be re-used. Consequently, a lower technical effort arises as existing end-devices and server systems can be re-used. The use of the second channel depending on the content of the indicator allows a communication between the server and the end-device, even if the first channel does not permit a communication from the server to the end-device. The reason for being able to use the first channel only for a communication from the end-device to the server and not vice versa may be that the end-device is deployed beneath the surface. Therefor, the use of a second channel for a communication from the server to the end-device is beneficial.

The end-device may be a device being applied in the context of the so-called internet of things. This means that the end-device is typically equipped with only a minimum of hardware resources and uses for instance a battery or an induction coil for providing energy. Consequently, the end-device may comprise additional sensors or the like. The server system may be formed by a commonly known server or several servers or computing devices in general. The method steps are performed by respective computer implemented means such as instruction sets, which may be distributed over the network or physically located on a single server system.

The underlying communication infrastructure can be a wide area network, especially a low-power wide-area network. Hence, additional hardware means are required for establishing data transmissions. These may involve the usage of further commonly known protocols.

For performing an activation of the end-device with the hardware environment transmitting at least a join-request message from the end-device to the server is required. No response is given to the end-device if the join request is not accepted by the server. If the server accepts the end-device, it may respond by sending a join-accept message. Further details to this procedure are given in the LoRaWAN specification, for instance.

According to an aspect of the invention, the preferred channel may be an out-of-band channel, in particular a channel that uses a different communication means. The different communication means may be, for instance, a local gateway. The local gateway may be disposed in proximity to the end-device. Accordingly, it is advantageously possible to establish a communication link between the server and the local gateway as well as between the local gateway and the end-device. Accordingly, the second channel could be routed through the communication means.

The out-of-band channel may be adapted to route and/ or transition the communication protocol from a first protocol to a second protocol and/or from a second protocol to a first protocol. Accordingly, the communication between the server and the different communication means may be carried out using the same protocol as for the first channel, i.e. the first protocol. As an alternative, the communication may be carried out using a different protocol, namely the second protocol.

The first channel, according to a preferred embodiment, may use a communication frequency between 850 MHz and 1000 MHz, in particular 865 MHz and/or 915 MHz. The communication, in particular the join-request and/ or the join accept message, is carried out in conformity with the LoRaWAN^{®} specification. Thus, it can be advantageously ensured that a secure communication can be established in conformity with the LoRaWAN^{®} specification despite it not being possible depending on the indicator to use the second channel.

According to a preferred aspect, the indicator comprises a data field, in particular an AppEUI and/or a DevEUI, indicating to the server to use the second channel to send the join-accept message from the server to the end-device. Thus, the server is adapted to immediately make use of the second channel, when sending the join-accept message to the end-device.

According to a further aspect, the server compares a data field in the indicator with data in a whitelist, depending on the content of the data field, the server determines the use of the first and/or the second channel. The second channel may comprise a communication according to the first and the second protocol.

According to another aspect, a method for establishing a secure communication between an end-device and a server system, comprises the steps: transmitting at least a first join-request message from the end-device to the server system via a first channel, wherein a second join-request message is sent to the server after a predetermined amount of time, if during the predetermined amount of time the end-device did not receive a join-accept message; the server system transmits a join-accept message from the server system to the end-device using a second channel, wherein the use of the second channel is determined based on the receipt of the first and the second join-request message.

According to this aspect, it is advantageously possible for the server to conclude that it was not possible for the end device to receive the join-accept message via the first channel. Thus, the use of the second channel is triggered.

According to an embodiment the first and the second join-request messages are identical or the first and the second join request messages are different from each other. In this manner, it is possible to determine depending on the content (identical/different) whether the reason for sending a second join-request message is that the first join-request message was not received.

The advantageous aspects of the various embodiments of the invention can also be experienced when an end-device and/or a server system carries out a method as described above. A person skilled in the art will easily recognize that various modifications are possible within the scope of the appended claims.

### Brief description of the drawings

Further advantages and technical effects are described with reference to the accompanying figures, which show:
- Fig. 1:: a schematic diagram depicting an extract of the communication system for secure communication between an end-device and a server system according to an aspect of the present invention;
- Fig. 2: a flow diagram depicting an exemplary embodiment of the invention; and
- Fig. 3:: a flow chart depicting an exemplary embodiment according to an aspect of the present invention.

### Detailed description of embodiments of the invention

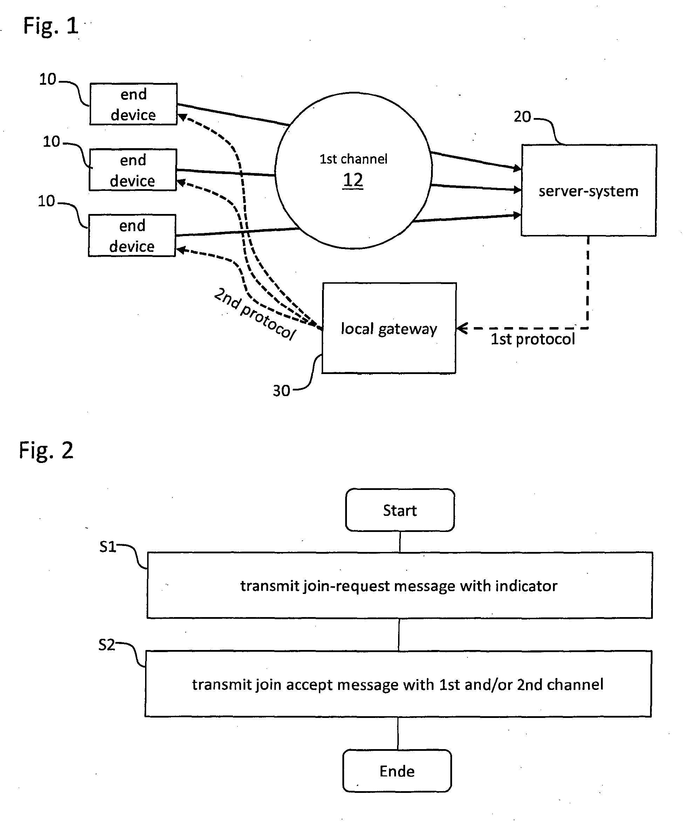

The following is a description of exemplary embodiments of the invention with reference to Fig. 1-3.

Fig. 1 shows a schematic diagram illustrating an example of an implementation of the suggested communication system. The communication system comprises at least an end-device 10, a server system 20 and a local gateway 30.

The end-device 10 may be a battery-powered end-device that is either mobile or mounted at a fixed location. The end-device 10 is adapted to communicate according to the LoRaWAN-specification. According to this specification it is necessary for the end-device 10 - in order to be able to participate in the communication - to be personalized and activated through a so called join-procedure. In order to personalize and activate the end device, the end-deice 10 sends an authentication uplink "join-request" to the server system 20 and waits for a downlink "join-accept". If this is not successful, the end device cannot join the LPWA network, and hence cannot send any uplink messages. As one of the main purposes of the end-device 10 may be to periodically send sensor data, for instance the data of an electricity meter or a water meter, to the server system 20, there are cases where the end-device is deployed in a remote location, for instance below the surface in a basement or the like. From the remote location, it may be possible to send data to the server system 20 via a first channel 12 (uplink). However, sending data from the server system 20 to the end-device 10 using the same first channel 12 (downlink) may be impeded; for instance due to the remote location of the end device 10.

In other words, there may be end-devices 10 that - after a successful join-procedure - will only send data to the server system 20 without the need to receive data from the server system 20. For instance, an electricity meter (end device 10) may only need to periodically send the current meter value to the server system 20 without the need for confirmation from the server system 20.

Nevertheless, it is necessary for such an end-device 10 to initially for the first use and after every reset to conduct a join-procedure with the server system 20. At least, during the course of the join-procedure, it will be necessary to send a message (join accept message) from the server system 20 to the end-device 10.

To be able to do so, the invention proposes to transmit at least a join-request message from the end-device 10 to the server system 20 via a first channel, in particular a channel according to the LoRaWAN-specification.

The join-request message comprises an indicator (step S1 in Fig. 2). The indicator could be a part, a special prefix, a range or a code in the AppEUI and/or the DevEUI according to the LoRaWAN-specification. Based on the content of the indicator, the server system 20 uses the first channel 12 and/ or a second channel when sending the join-accept message to the end-device 10 (step S2 in Fig. 2). The join-accept message authorizes the end-device 10 to send messages to the server system 20 using at least the first channel 12.

The second channel is preferably an out-of-band channel. Thus the second channel could be a channel that makes use of a different communication means. In other words, the second channel employs for the transmittal of a message from the server system 20 to the end-device 10 at least for a part of the communication path a different communication means.

The out-of-band channel is adapted to make sure that the join-accept message reaches the end-device 10. The out-of-band channel may be adapted to transition the communication from a first protocol to a second protocol. The transition could be effected in a (local) gateway 30. The local gateway 30 receives the data in the format of a first protocol. The first protocol may be carried out according to the LoRaWAN-specification. Thus, the server-system 20 sends the join-accept message to the local gateway 30 in a similar manner as the first channel 12, for instance using a communication according to LoRaWan-specification.

The data received in the local gateway 30 in the format of the first protocol is transitioned in the local gateway 30 to a second protocol. The second protocol may be a protocol that is adapted to establish a communication between the local gateway 30 and at least one of the end-devices 10. The second channel may be wire-bound or over-the-air. For instance, the communication could be effected using Bluetooth^{®} or Bluetooth-Low-Energy (BLE).

Thus, the second channel could be summarized as a channel using a communication according to a first and a second protocol.

As an alternative, the communication is transitioned from the second protocol to the first protocol. This may be effected by using the examples described above with respect to the first and the second protocol.

The first channel 12 preferably uses a communication frequency between 850 MHz and 1000 MHz, in particular 865 MHz and/or 915 MHz. The join-procedure, i.e. the join-request and/or the join-accept, is carried out according to the LoRaWAN^{®} specification. In this regard, prior to sending the join-accept message, the server system 20 determines whether the end-device is permitted to communicate with the server.

As a further means, the server system 20 may compare data, in particular a data field, in the indicator with data in a whitelist. Depending on the content of the data, the server system 20 may determine the use of the first and/ or the second channel.

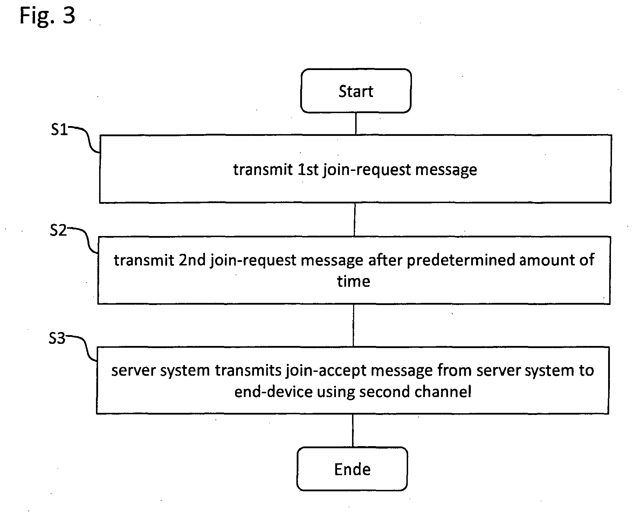

In an alternative embodiment, in order to establish a secure communication between an end-device 10 and a server system 20, a first join-request message is transmitted from the end-device 10 to the server system 20 via a first channel (step 1 in Fig. 3). If the end-device 10 does not receive a join-accept message during a predetermined amount of time, a second join-request message is sent to the server system 20 (step 2 in Fig. 3). If the server system 20 receives both the first and the second join-request message from the same end-device 10, the server system 20 determines that the first join accept message (sent by the server system to the end-device 10) was not received by the end-device and thus, the server system 20 decides to use a second channel to send the join accept message to the end-device 10 (step 3 in Fig. 3).

Since the server system 20 receives the two join-request messages despite having sent a first join accept message to the end-device already after receiving the first join-request message, the server system 20 concludes that the first join-accept message did not "go through". Accordingly, the server system determines 20 that there could be a connection problem when sending the first join-accept message. Thus, the server system 20 uses the second channel to send the join-accept message to the end-device.

Similar as in the embodiments above, the second channel may be an out-of-band channel.

The end-device 10 can - in order to indicate - that it did not receive the join-accept message, send an identical second join-request message to the server system 20 or it can send a different second join-request message. The different second join-request message could indicate that this is the second join-request message without having received a join-accept message in between.

## Claims

1. A method for establishing a secure communication between an end-device and a server system, comprising the steps:
- transmitting (100) at least a join-request message from the end-device to the server system via a first channel, **characterized in that**
- the join-request message comprises an indicator;
- the server system transmits a join-accept message from the server system to the end-device employing, based on the indicator, the first channel and/or a second channel, wherein the join-accept message authorizes the end-device to send messages to the server system.

2. Method according to claim 1, **characterized in that** the second channel is an out-of-band channel, in particular a channel that uses a different communication means.

3. Method according to claim 2, **characterized in that** the out-of-band channel is adapted to transition the communication from a first protocol to a second protocol and/or from a second protocol to a first protocol.

4. Method according to claim 2 or 3, **characterized in that** the first protocol is the same protocol as the protocol of the first channel.

5. Method according to claim 3, **characterized in that** the second protocol is a different protocol in comparison to the first protocol.

6. Method according to any one of the preceding claims, **characterized in that** the first channel uses a communication frequency between 850 MHz and 1000 MHz, in particular 865 MHz and/ or 915 MHz.

7. Method according to any one of the preceding claims, **characterized in that** that the communication, in particular the join-request and/or the join accept message, is carried out according to the LoRaWAN^{®} specification.

8. Method according to any one of the preceding claims, **characterized in that**, prior to sending the join-accept message to the device, the server system (20) determines whether the end-device is permitted to communicate with the server.

9. Method according to any one of the preceding claims, **characterized in that** the indicator comprises a data field, in particular an AppEUI and/or a DevEUI, indicating to the server to use the second channel to send the join-accept message from the server to the end-device.

10. Method according to any one of the preceding claims, **characterized in that** the server system compares data in the indicator with data in a whitelist, depending on the content of the data, the server system determines the use of the first and/or the second channel.

11. A method for establishing a secure communication between an end-device and a server system, comprising the steps:
- transmitting (100) a first join-request message from the end-device to the server system via a first channel, **characterized in that**
- a second join-request message is sent to the server system after a predetermined amount of time, if during that predetermined amount of time the end-device did not receive a join-accept message;
- the server system transmits a join-accept message from the server system to the end-device using a second channel, wherein the use of the second channel is determined based on the receipt of the first and the second join-request message.

12. Method according to claim 11, **characterized in that** the first and the second join-request messages are identical or the first and the second join request messages are different.

13. An end-device and/ or a server system being adapted to carry out a method in accordance with any one of the preceding claims 1 to 12.
